# EUROPEAN PATENT APPLICATION

(11) **EP 4 770 146 A1**
(43) Date of publication of application: **01.07.2026**
(21) Application number: 24872476.7
(22) Date of filing: 27.09.2024
(51) Int. Cl.: H04W 4/06, H04W 76/27

(54) **COMMUNICATION METHOD AND USER DEVICE**

(30) Priority: 27.09.2023 JP 2023164162
(71) Applicant: KYOCERA Corporation, Kyoto-shi, Kyoto 612-8501 (JP)
(72) Inventor: FUJISHIRO, Masato, Kyoto-shi, Kyoto 612-8501 (JP)
(74) Representative: Viering, Jentschura & Partner mbB Patent- und Rechtsanwälte
(86) International application number: PCT/JP2024/034573
(87) International publication number: WO 2025/070693

(57) **Abstract**

A communication method executed by a user equipment in a mobile communication system for providing an MBS, the communication method including: establishing, in an RRC_connected state, a multicast MRB based on a first MRB configuration configured from a network; receiving, from the network and by using the established multicast MRB, a multicast session corresponding to a first MBS session ID included in the first MRB configuration; receiving, from the network, a second MRB configuration, which is information for configuring a multicast MRB for an RRC_inactive state and includes a second MBS session ID; and performing, based on the second MRB configuration, a configuration change relating to the established multicast MRB when the second MBS session ID matches the first MBS session ID.

## Description

### TECHNICAL FIELD

The present disclosure relates to a communication method and a user equipment used in a mobile communication system.

### BACKGROUND OF INVENTION

In the Third Generation Partnership Project (3GPP) (registered trademark; hereinafter the same), technical specifications of New Radio (NR), which is a fifth-generation (5G) radio access technology, are defined. NR has features such as high speed, large capacity, high reliability, and low latency as compared to Long Term Evolution (LTE) that is a radio access technology of the fourth generation (4G). The 3GPP has defined technical specifications of multicast/broadcast services (MBS) of SG/NR.

In 3GPP Release 17, MBS multicast reception (i.e., multicast reception) is possible only for a user equipment in a radio resource control (RRC) connected state (see, for example, Non-Patent Literature 1). On the other hand, in 3GPP Release 18, technical specifications are scheduled to be extended so that a user equipment in an RRC_inactive state can perform multicast reception.

### CITATION LIST

### NON-PATENT LITERATURE

Non-Patent Literature 1: 3GPP Technical Specification: TS 38.300 V17.5.0

### SUMMARY

A communication method according to a first aspect is a communication method executed by a user equipment in a mobile communication system for providing a multicast broadcast service (MBS), the method communication including: establishing, in an RRC_connected state, a multicast radio bearer (MRB) based on an MRB configuration configured from a network; receiving, from the network and by using the established multicast MRB, a multicast session corresponding to a first MBS session ID included in the MRB configuration; receiving, from the network, a multicast configuration, which is information for configuring multicast reception for an RRC_inactive state and includes a second MBS session ID; and applying the multicast configuration when a multicast session corresponding to the second MBS session ID is received in the RRC_inactive state in the same cell as a cell in which the multicast session corresponding to the first MBS session ID has been received in the RRC_connected state.

A communication method according to a second aspect is a communication method executed by a user equipment in a mobile communication system for providing a multicast broadcast service (MBS), the communication method including: establishing, in an RRC_connected state, a multicast radio bearer (MRB) based on a first MRB configuration configured from a network; receiving, from the network and by using the established multicast MRB, a multicast session corresponding to a first MBS session ID included in the first MRB configuration; receiving, from the network, a second MRB configuration, which is information for configuring a multicast MRB for an RRC_inactive state and includes a second MBS session ID; and performing, based on the second MRB configuration, a configuration change relating to the established multicast MRB when the second MBS session ID matches the first MBS session ID.

A user equipment according to a third aspect is a user equipment used in a mobile communication system for providing a multicast broadcast service (MBS), the user equipment including a controller configured to execute: in an RRC_connected state, processing of establishing a multicast radio bearer (MRB) based on a first MRB configuration configured from a network; processing of receiving, from the network and by using the established multicast MRB, a multicast session corresponding to a first MBS session ID included in the first MRB configuration; processing of receiving, from the network, a second MRB configuration, which is information for configuring a multicast MRB for an RRC_inactive state and includes a second MBS session ID; and processing of performing, based on the second MRB configuration, a configuration change relating to the established multicast MRB when the second MBS session ID matches the first MBS session ID.

### BRIEF DESCRIPTION OF THE DRAWINGS

FIG. 1 is a diagram illustrating a configuration example of a mobile communication system according to an embodiment.
FIG. 2 is a diagram illustrating a configuration example of a user equipment (UE) according to the embodiment.
FIG. 3 is a diagram illustrating a configuration example of a gNB (network node) according to the embodiment.
FIG. 4 is a diagram illustrating a configuration of a protocol stack of a radio interface of a user plane handling data.
FIG. 5 is a diagram illustrating a configuration of a protocol stack of a radio interface of a control plane handling signaling (control signal).
FIG. 6 is a diagram illustrating an assumed scenario according to the embodiment.
FIG. 7 is a diagram illustrating the assumed scenario according to the embodiment.
FIG. 8 is a diagram illustrating a first operation example of the UE according to the embodiment.
FIG. 9 is a flowchart illustrating a second operation example of the UE according to the embodiment.

### DESCRIPTION OF EMBODIMENTS

According to an embodiment, a mobile communication system is described with reference to the drawings. In the description of the drawings, the same or similar parts are denoted by the same or similar reference signs.

### (1) System Configuration Example

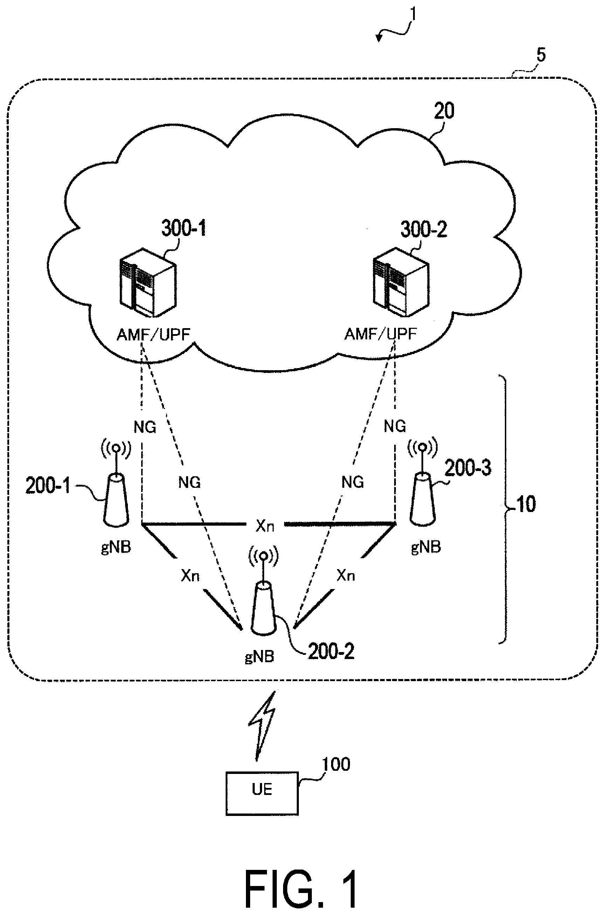

FIG. 1 is a diagram illustrating a configuration example of a mobile communication system 1 according to the embodiment. The mobile communication system 1 complies with the 5th Generation System (5GS) of the 3GPP standard. The description below takes the 5GS as an example, but Long Term Evolution (LTE) system may be at least partially applied to the mobile communication system. Alternatively, a sixth generation (6G) system may be at least partially applied to the mobile communication system.

The mobile communication system 1 includes a User Equipment (UE) 100, a 5G radio access network (Next Generation Radio Access Network (NG-RAN)) 10, and a 5G Core Network (5GC) 20. Hereinafter, the NG-RAN 10 may be simply referred to as a RAN 10. The 5GC 20 may be simply referred to as a core network (CN) 20. The RAN 10 and the CN 20 configure a network 5 of the mobile communication system 1.

The UE 100 is a mobile wireless communication apparatus. The UE 100 may be any apparatus as long as the UE 100 is used by a user. Examples of the UE 100 include a mobile phone terminal (including a smartphone) or a tablet terminal, a notebook PC, a communication module (including a communication card or a chipset), a sensor or an apparatus provided on a sensor, a vehicle or an apparatus provided on a vehicle (Vehicle UE), and a flying object or an apparatus provided on a flying object (Aerial UE).

The NG-RAN 10 includes base stations 200 (referred to as "gNBs" in 5G systems), which are a type of network node. The gNBs 200 are interconnected via an Xn interface which is an inter-base station interface. Each gNB 200 manages one or more cells. The gNB 200 performs wireless communication with the UE 100 that has established a connection to the cell of the gNB 200. The gNB 200 has a radio resource management (RRM) function, a function of routing user data (hereinafter simply referred to as "data"), a measurement control function for mobility control and scheduling, and the like. The "cell" is used as a term representing a minimum unit of a wireless communication area. The "cell" is also used as a term representing a function or a resource for performing wireless communication with the UE 100. One cell belongs to one carrier frequency (hereinafter, simply referred to as a "frequency").

Note that the gNB can be connected to an Evolved Packet Core (EPC) corresponding to a core network of LTE. An LTE base station can also be connected to the 5GC. The LTE base station and the gNB can be connected via an inter-base station interface.

The 5GC 20 includes an Access and Mobility Management Function (AMF) and a User Plane Function (UPF) 300. The AMF performs various types of mobility controls and the like for the UE 100. The AMF manages mobility of the UE 100 by communicating with the UE 100 by using Non-Access Stratum (NAS) signaling. The UPF controls data transfer. The AMF and UPF are connected to the gNB 200 via an NG interface which is an interface between a base station and the core network.

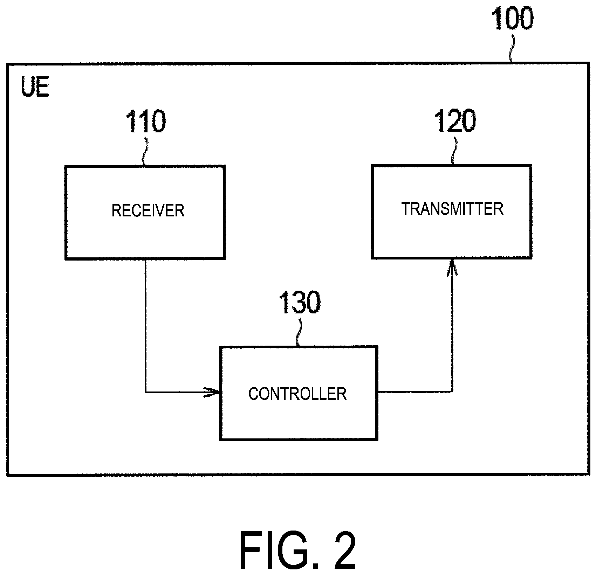

FIG. 2 is a diagram illustrating a configuration example of the UE 100 (user equipment) according to the embodiment. The UE 100 includes a receiver 110, a transmitter 120, and a controller 130. The receiver 110 and the transmitter 120 constitute a wireless communicator that performs wireless communication with the gNB 200.

The receiver 110 performs various receptions under the control of the controller 130. The receiver 110 includes an antenna and a reception device. The reception device converts a radio signal or a terahertz wave signal received through the antenna into a baseband signal (a reception signal) and outputs the resulting signal to the controller 130.

The transmitter 120 performs various transmissions under the control of the controller 130. The transmitter 120 includes an antenna and a transmission device. The transmission device converts a baseband signal (a transmission signal) output by the controller 130 into a radio signal or a terahertz wave signal and transmits the resulting signal through the antenna.

The controller 130 performs various controls and processes in the UE 100. Such processing includes processing of respective layers to be described later. The operations of the UE 100 described above and below may be operations under the control of a controller 230. The controller 130 includes at least one processor and at least one memory. The memory stores a program to be executed by the processor and information to be used for processing in the processor. The processor may include a baseband processor and a Central Processing Unit (CPU). The baseband processor performs modulation and demodulation, coding and decoding, and the like of a baseband signal. The CPU executes the program stored in the memory to thereby perform various types of processing.

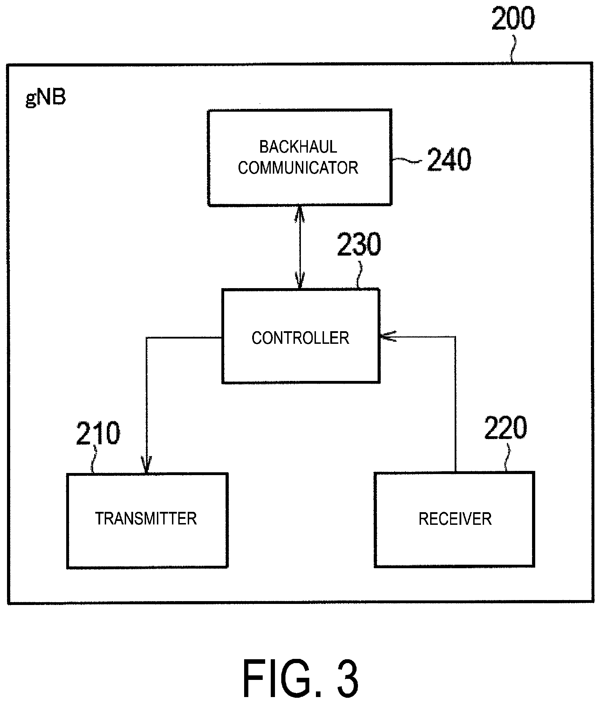

FIG. 3 is a diagram illustrating a configuration example of a gNB 200 (network node) according to the embodiment. The gNB 200 includes a transmitter 210, a receiver 220, a controller 230, and a backhaul communicator 240. The transmitter 210 and the receiver 220 constitute a wireless communicator that performs wireless communication with the UE 100. The backhaul communicator 240 constitutes a network communicator that performs communication with the CN 20.

The transmitter 210 performs various transmissions under the control of the controller 230. The transmitter 210 includes an antenna and a transmission device. The transmission device converts a baseband signal (a transmission signal) output by the controller 230 into a radio signal or a terahertz wave signal and transmits the resulting signal through the antenna.

The receiver 220 performs various types of reception under control of the controller 230. The receiver 220 includes an antenna and a reception device. The reception device converts a radio signal or a terahertz wave signal received through the antenna into a baseband signal (a reception signal) and outputs the resulting signal to the controller 230.

The controller 230 performs various types of control and processing in the gNB 200. Such processing includes processing of respective layers to be described later. The operations of the gNB 200 described above and below may be also performed under the control of the controller 230. The controller 230 includes at least one processor and at least one memory. The memory stores a program to be executed by the processor and information to be used for processing in the processor. The processor may include a baseband processor and a CPU. The baseband processor performs modulation and demodulation, coding and decoding, and the like of a baseband signal. The CPU executes the program stored in the memory to thereby perform various types of processing.

The backhaul communicator 240 is connected to a neighboring base station via an Xn interface which is an inter-base station interface. The backhaul communicator 240 is connected to the AMF/UPF 300 via an NG interface which is an interface between a base station and the core network. Note that the gNB 200 may include a Central Unit (CU) and a Distributed Unit (DU) (i.e., functions are divided), and both units may be connected via an F1 interface that is a fronthaul interface.

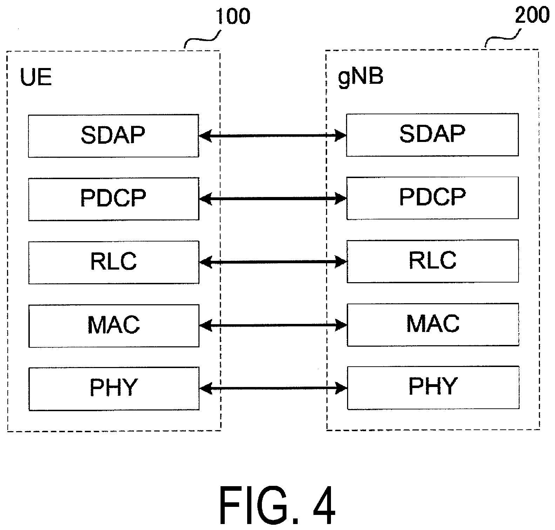

FIG. 4 is a diagram illustrating a configuration of a protocol stack of a radio interface of a user plane handling data.

A radio interface protocol of the user plane includes a physical (PHY) layer, a Medium Access Control (MAC) layer, a Radio Link Control (RLC) layer, a Packet Data Convergence Protocol (PDCP) layer, and a Service Data Adaptation Protocol (SDAP) layer.

The PHY layer performs encoding/decoding, modulation/demodulation, antenna mapping/demapping, and resource mapping/demapping. Data and control information are transmitted between the PHY layer of the UE 100 and the PHY layer of the gNB 200 via a physical channel. Note that the PHY layer of the UE 100 receives downlink control information (DCI) transmitted from the gNB 200 over a physical downlink control channel (PDCCH). Specifically, the UE 100 performs blind decoding of the PDCCH by using a radio network temporary identifier (RNTI) and acquires a successfully decoded DCI as a DCI addressed to the UE. The DCI transmitted from the gNB 200 is appended with Cyclic Redundancy Code (CRC) parity bits scrambled by the RNTI.

The MAC layer performs priority control of data, retransmission processing through hybrid ARQ (HARQ: Hybrid Automatic Repeat reQuest), a random access procedure, and the like. Data and control information are transmitted between the MAC layer of the UE 100 and the MAC layer of the gNB 200 via a transport channel. The MAC layer of the gNB 200 includes a scheduler. The scheduler decides transport formats (transport block sizes, Modulation and Coding Schemes (MCSs)) in the uplink and the downlink and resource blocks to be allocated to the UE 100.

The RLC layer transmits data to the RLC layer on the reception side by using functions of the MAC layer and the PHY layer. Data and control information are transmitted between the RLC layer of the UE 100 and the RLC layer of the gNB 200 via a logical channel.

The PDCP layer performs header compression/decompression, encryption/decryption, and the like.

The SDAP layer performs mapping between an IP flow as the unit of Quality of Service (QoS) control executed by a core network and a radio bearer as the unit of QoS control executed by an Access Stratum (AS). Note that, when the RAN is connected to the EPC, the SDAP need not be provided.

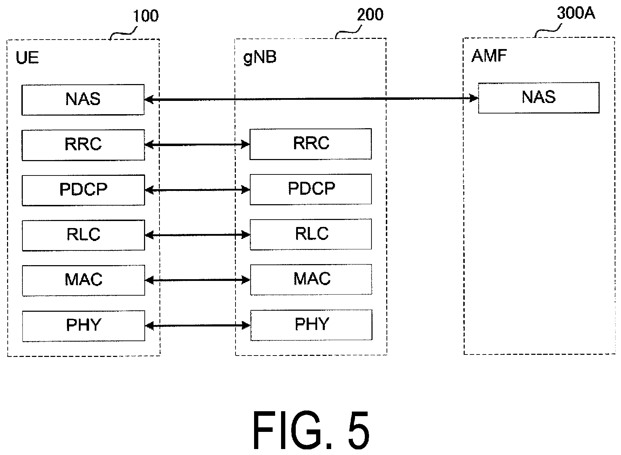

FIG. 5 is a diagram illustrating a configuration of a protocol stack of a radio interface of a control plane handling signaling (a control signal).

The protocol stack of the radio interface of the control plane includes a Radio Resource Control (RRC) layer and a Non-Access Stratum (NAS) layer instead of the SDAP layer illustrated in FIG. 4.

RRC signaling for various configurations is transmitted between the RRC layer of the UE 100 and the RRC layer of the gNB 200. The RRC layer controls a logical channel, a transport channel, and a physical channel according to establishment, re-establishment, and release of a radio bearer. When connection (RRC connection) is established between RRC of the UE 100 and RRC of the gNB 200, the UE 100 is in an RRC_connected state. When connection (RRC connection) is not established between the RRC of the UE 100 and the RRC of the gNB 200, the UE 100 is in an RRC_idle state. When the connection between the RRC of the UE 100 and the RRC of the gNB 200 is suspended, the UE 100 is in an RRC_inactive state.

The NAS layer (also simply referred to as "NAS"), which is located above the RRC layer, performs session management, mobility management, and the like. NAS signaling is transmitted between the NAS layer of the UE 100 and the NAS layer of an AMF 300A. The UE 100 includes an application layer other than the protocol of the radio interface. The layer below the NAS layer is referred to as an AS layer (also simply referred to as "AS").

### (2) Overview of MBS

The mobile communication system 1 can perform delivery with high resource efficiency by using the multicast/broadcast service (MBS).

### (2.1) MBS Broadcast

In a case of the broadcast communication services (also referred to as "MBS broadcast"), the same service and the same specific content data are provided simultaneously to every UE 100 in a geographic area. That is, every UE 100 in the broadcast service area is permitted to receive the data. The broadcast communication services are delivered to the UE 100 using a broadcast session that is a type of MBS session. The UE 100 can receive the broadcast session in any state of the RRC_idle state, the RRC_inactive state, and the RRC_connected state.

Point-to-Multipoint (PTM) delivery is applied to the broadcast communication service. For the PTM transmission, the gNB 200 delivers a single copy of an MBS packet to a set (group) of a plurality of UEs 100. For example, the gNB 200 uses a group-common PDCCH with a CRC scrambled by a Group RNTI (G-RNTI) that is a group-common RNTI to schedule a group-common PDSCH scrambled by the G-RNTI.

For the broadcast communication service, the UE 100 receives a broadcast session in the following procedure. First, the UE 100 receives system information block type 20 (SIB20) from the gNB 200. The SIB20 includes a configuration of a multicast control channel (MCCH), which is a type of logical channel. Second, the UE 100 receives the MCCH from the gNB 200 based on the SIB20. The MCCH includes a PTM configuration. The PTM configuration transmits a configuration for a multicast traffic channel (MTCH) (MTCH configuration), which is a type of logical channel, and a configuration of a broadcast multicast radio bearer (MRB), which is an MRB for broadcast session. The information transmitted by the MCCH may be referred to as MBS broadcast control information. Third, the UE 100 receives the MTCH based on the MCCH. The MTCH transmits a broadcast session (specifically, MBS data belonging to the broadcast session).

The MCCH is a PTM downlink channel for transmitting, from the network 5 to the UE 100, MBS broadcast control information associated with one or more MTCHs. The MTCH is a PTM downlink channel for transmitting MBS data of a multicast session or a broadcast session from the network 5 to the UE 100.

### (2.2) MBS Multicast

For a multicast communication service (also referred to as "MBS multicast"), the same service and the same specific content data are simultaneously provided to a specific UE set. That is, not every UE 100 in the multicast service area is permitted to receive data. The multicast communication service is delivered to the UE 100 using a multicast session that is a type of MBS session.

The UE 100 can receive a multicast session only after joining the multicast session (session join). The joining the multicast session may mean that the UE 100 is registered as being capable of receiving the multicast session in the network 5 (the CN 20).

For the multicast communication service, in 3GPP Release 17, only the UE 100 in the RRC_connected state can receive a multicast session. On the other hand, in the 3GPP Release 18, the specification is extended so that the UE 100 in an RRC_inactive state can also receive a multicast session.

### (2.2.1) Multicast Reception in RRC_connected State

The UE 100 in the RRC_connected state can receive a multicast session (specifically, MBS data belonging to a multicast session) by using mechanisms such as Point-to-Point (PTP) delivery and/or Point-to-Multipoint (PTM) delivery.

For the multicast communication service, the UE 100 in the RRC_connected state receives a multicast session in the following procedure. First, the UE 100 receives an RRC Reconfiguration message from the gNB 200. The RRC Reconfiguration message is a message transmitted on a dedicated control channel (DCCH). The RRC Reconfiguration message transmits a configuration for an MTCH for multicast session reception (MTCH configuration) and a configuration of a multicast MRB which is an MRB for multicast session. Second, the UE 100 receives an MTCH based on the RRC Reconfiguration message. The MTCH transmits a multicast session (specifically, MBS data belonging to the multicast session).

### (2.2.2) Multicast Reception in RRC_inactive state

The UE 100 in the RRC_inactive state may receive a multicast session (specifically, MBS data belonging to the multicast session) by using the mechanism of the PTM delivery.

For the multicast communication service, the UE 100 in the RRC_inactive state can receive a multicast session in the following procedure. First, the UE 100 in the RRC_inactive state receives, from the gNB 200, a newly introduced system information block (also referred to as "SIBx"). The SIBx includes a configuration of a newly introduced MCCH (also referred to as "multicast MCCH"). Second, the UE 100 in an RRC_inactive state receives, from the gNB 200, a multicast MCCH based on the SIBx. The multicast MCCH includes a PTM configuration. The PTM configuration transmits an MTCH configuration, which is a configuration related to an MTCH for multicast session reception, and an inactive MRB configuration, which is a configuration of an inactive MRB that is an MRB for multicast session reception in the RRC_inactive state. The MTCH configuration may be included in a multicast MRB configuration. Third, the UE 100 in the RRC_inactive state receives an MTCH based on the multicast MCCH. The MTCH transmits a multicast session, specifically, MBS data belonging to the multicast session (i.e., multicast data).

When the gNB 200 configures the UE 100 to receive a multicast session in an RRC_inactive state, the gNB 200 can transmit a PTM configuration (multicast MRB configuration) to the UE 100 by using an RRC Release message including a suspend configuration. In this case, when the UE 100 receives, from the gNB 200, an RRC Release message including the PTM configuration, the UE 100 transitions to the RRC_inactive state and performs reception of a multicast session (multicast reception) in the RRC_inactive state.

### (2.2.3) Group Notification

When there is temporarily no data to be transmitted to the UE 100 in an active multicast session, the gNB 200 may transition the UE 100 to the RRC_inactive state. When the multicast session is deactivated, the gNB 200 may cause the UE 100 to transition to the RRC_idle state or the RRC_inactive state.

The gNB 200 supporting the MBS notifies the UE 100 in the RRC_idle state or the RRC_inactive state by using a group notification mechanism when the multicast session is activated by the CN 20. The gNB 200 that supports MBS may notify the UE 100 in the RRC_inactive state using a group notification mechanism when a multicast session has been activated and the gNB 200 has multicast session data to deliver.

Upon receiving the group notification, the UE 100 reconnects to the network 5 or resumes the connection to transition to the RRC_connected state. The group notification is processed with a paging RNTI (P-RNTI) on the PDCCH, and a paging channel is monitored by the UE 100.

A paging message used for the group notification includes session identifiers (MBS session IDs) for paging all UEs 100 in the RRC_idle state and the RRC_inactive state that have joined the associated MBS multicast session. That is, the UE 100 is not individually paged.

When the UE 100 transitions to the RRC_connected state, the UE 100 may stop monitoring the group notification associated with the particular multicast session. That is, the UE 100 stops checking the MBS session ID in the paging message. The UE 100 does not monitor the group notification when the UE 100 leaves the multicast session, the network 5 requests the UE 100 to leave the multicast session, or the network 5 releases the multicast session.

Note that the group notification may be performed on the MCCH or may be performed with an MCCH Change Notification. In the case of using the MCCH, the determination may be made depending on whether the MTCH configuration of the MBS session of interest is present in the MCCH. In a case of using the MCCH Change Notification, the group notification may be made in a predetermined bit of the DCI.

### (3) Operation of Mobile Communication System

An operation of the mobile communication system 1 according to an embodiment will be described.

### (3.1) Overview of Operation

In the MBS multicast defined in 3GPP Release 17, an MRB ID of a multicast MRB is configured for the UE 100 by the gNB 200, and the multicast MRB is managed by the MRB ID. The MRB ID is cell-specific. Such a multicast MRB is dedicated to the RRC_connected state, and the multicast MRB is reconfigured by the gNB 200 together with the MRB ID at the time of handover of the UE 100.

In the MBS broadcast defined in 3GPP Release 17, an MRB ID of a broadcast MRB is not configured for the UE 100 by the gNB 200, the assignment of an MRB ID to the broadcast MRB depends on UE implementation, and no MRB ID exists for the broadcast MRB. Therefore, the UE 100 that performs broadcast reception in an RRC_idle state or an RRC_inactive state can perform cell reselection without considering an MRB ID.

On the other hand, in a scenario of the 3GPP Release 18, that is, a scenario in which the UE 100 in the RRC_inactive state performs multicast reception, the UE 100 that performs multicast reception can perform cell reselection. Therefore, it is considered that, similar to a broadcast MRB, an MRB ID is not configured for the UE 100 by the gNB 200 for a multicast MRB for the RRC_inactive state. When the MRB ID is not configured for the UE 100 by the gNB 200, there is a problem in that the multicast MRB cannot be managed by the MRB ID.

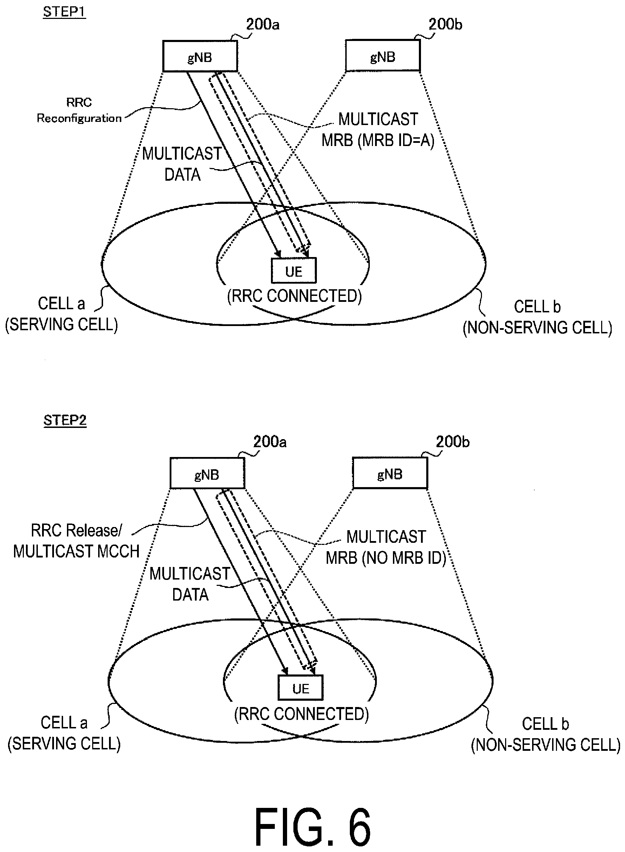

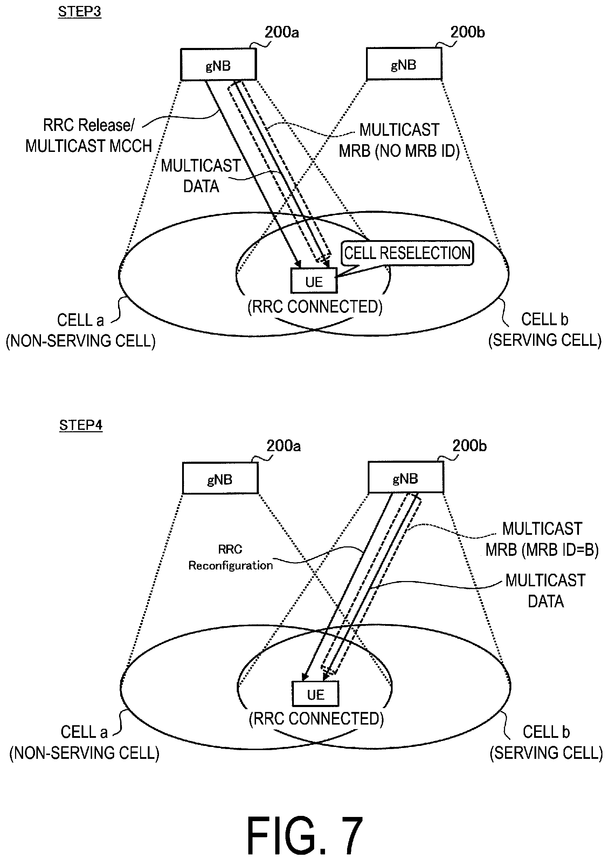

FIGs. 6 and 7 are diagrams for illustrating an assumed scenario according to the embodiment. In this assumed scenario, after the UE 100 that has already participated in a multicast session transitions from the RRC_connected state to the RRC_inactive state in a cell a, the UE 100 performs cell reselection in which the serving cell is reselected from the cell a to a cell b in the RRC_inactive state, and the UE 100 transitions to the RRC_connected state in the cell b. In the illustrated example, an example is shown in which the cell a and the cell b belong to different gNBs 200 (gNB 200a and gNB 200b); however, the cell a and the cell b may belong to one gNB 200.

In STEP 1 illustrated in FIG. 6, the UE 100 in the RRC_connected state in the cell a has a multicast MRB for the RRC_connected state configured by the gNB 200a. Specifically, the gNB 200a transmits to the UE 100 an RRC Reconfiguration message including a first MRB configuration for configuring the multicast MRB. The UE 100 that receives the RRC Reconfiguration message establishes the multicast MRB and receives a multicast session (multicast data) on an MTCH by using the multicast MRB. Here, it is assumed that the gNB 200a configures "A" as an MRB ID of the multicast MRB.

In STEP 2 illustrated in FIG. 6, the UE 100 transitions from the RRC_connected state to the RRC_inactive state in the cell a. Specifically, the gNB 200a transmits to the UE 100 the RRC Release message for transitioning the UE 100 to the RRC_inactive state (that is, an RRC Release message including a suspend configuration). The suspend configuration may include information indicating which multicast services (multicast sessions) are receivable in the RRC_inactive state. The UE 100 that receives the RRC Release message transitions to the RRC_inactive state. The RRC Release message may include a second MRB configuration for configuring a multicast MRB for the RRC_inactive state. The gNB 200 may transmit (broadcast) the second MRB configuration for configuring a multicast MRB for the RRC_inactive state by a multicast MCCH. The second MRB configuration does not include an MRB ID of the multicast MRB.

Here, by continuously using in the RRC_inactive state the multicast MRB established in the RRC_connected state (and the PDCP entity associated with the multicast MRB), the UE 100 can suppress interruption of multicast data reception (that is, packet loss). The UE 100, by associating the multicast MRB configured by the first MRB configuration with the multicast MRB configured by the second MRB configuration, can perform a configuration change (reconfiguration) of the multicast MRB established based on the first MRB configuration based on the second MRB configuration, and can continuously use the multicast MRB.

However, when the second MRB configuration transmitted in an RRC Release message or a multicast MCCH does not include an MRB ID, the UE 100 cannot associate the multicast MRB configured by the first MRB configuration with the multicast MRB configured by the second MRB configuration by using the MRB ID as a key. Therefore, there is a problem in that it is difficult for the UE 100 to continuously use, in the RRC_inactive state, the multicast MRB established in the RRC_connected state. In order to solve such a problem, in the embodiment, the UE 100 associates the multicast MRB configured by the first MRB configuration with the multicast MRB configured by the second MRB configuration by using, as a key, not the MRB ID but an MBS session ID (Temporary Mobile Group Identity: TMGI). Accordingly, the UE 100 can continuously use, in the RRC_inactive state, the multicast MRB (and a PDCP entity associated with the multicast MRB) that was established in the RRC_connected state.

In STEP 3 illustrated in FIG. 7, the UE 100 in the RRC_inactive state performs cell reselection from the cell a to the cell b. Here, it is assumed that the UE 100 continuously uses, in the RRC_inactive state, the multicast MRB established in STEP 1 after the configuration change in STEP 2, and continues reception of the multicast session in the RRC_inactive state.

In STEP 4 illustrated in FIG. 7, the UE 100 starts an RRC connection resume procedure in the cell b and transitions to the RRC_connected state. Specifically, the RRC connection resume procedure is completed, and the UE 100 transitions to the RRC_connected state, by the UE 100 transmitting an RRC Resume Request message to the gNB 200b, the gNB 200b transmitting an RRC Resume message to the UE 100, and the UE 100 transmitting an RRC Resume Complete message to the gNB 200b. The gNB 200b transmits to the UE 100 the RRC Reconfiguration message including a third MRB configuration for configuring a multicast MRB for the RRC_connected state. Here, it is assumed that the gNB 200a configures "B" as an MRB ID of the multicast MRB.

Here, by continuously using in the RRC_connected state the multicast MRB (and a PDCP entity associated with the multicast MRB) that the UE 100 has been using in the RRC_inactive state, the UE 100 can suppress interruption of multicast data reception (that is, packet loss). By associating the multicast MRB configured by the second MRB configuration with the multicast MRB configured by the third MRB configuration, the UE 100 can perform a configuration change (reconfiguration) of the multicast MRB in use based on the third MRB configuration, and can continuously use the multicast MRB.

However, when no MRB ID exists for the multicast MRB that the UE 100 has been using in the RRC_inactive state, the UE 100 cannot associate the multicast MRB used in the RRC_inactive state with the multicast MRB configured by the third MRB configuration by using the MRB ID as a key. Therefore, there is a problem in that it is difficult for the UE 100 to continuously use, in the RRC_connected state, the multicast MRB used in the RRC_inactive state. In order to solve such a problem, in the embodiment, the UE 100 associates the multicast MRB used in the RRC_inactive state with the multicast MRB configured by the third MRB configuration by using, as a key, not the MRB ID but an MBS session ID. Accordingly, the UE 100 can continuously use, in the RRC_connected state, the multicast MRB (and a PDCP entity associated with the multicast MRB) used in the RRC_inactive state. In addition, the UE 100 can apply the MRB ID "B" configured by the third MRB configuration to the multicast MRB.

As described above, in the embodiment, the UE 100 performs configuration handover (partial handover) between a multicast MRB for the RRC_connected state and an MRB for the RRC_inactive state by using an MBS session ID instead of an MRB ID. This allows MRB configuration handover even when the gNB 200 does not configure an MRB ID for the UE 100 for a multicast MRB for the RRC_inactive state. Further, since the PDCP entity associated with the multicast MRB can be maintained without being reset, the continuity of multicast service can be improved.

### (3.2) Operation Example when Transitioning from RRC_connected State to RRC_inactive State

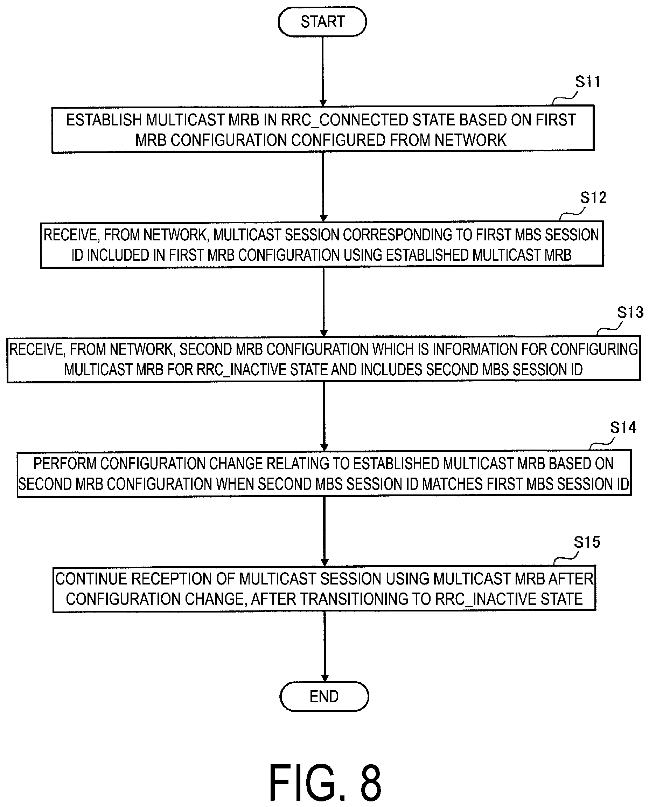

FIG. 8 is a diagram illustrating a first operation example of the UE 100 according to the embodiment. Specifically, the first operation example is an operation example when transitioning from the RRC_connected state to the RRC_inactive state.

In step S11, the UE 100 establishes a multicast MRB based on a first MRB configuration configured by the network 5 (gNB 200) in the RRC_connected state. Specifically, the UE 100 establishes the multicast MRB and a PDCP entity and an RLC entity corresponding to the multicast MRB by receiving, from the network 5 (gNB 200) in an RRC RRC Reconfiguration message, a first MRB configuration, which is information for configuring a multicast MRB for the RRC_connected state and includes a first MBS session ID and an MRB ID (for example, MRB ID=A). The RRC RRC Reconfiguration message may include a plurality of first MRB configurations corresponding to a plurality of multicast MRBs.

In step S12, the UE 100 receives, from the network 5 (gNB 200) and by using the multicast MRB established in step S11, a multicast session corresponding to the first MBS session ID included in the first MRB configuration. The UE 100 receives data (multicast data) of the multicast session on an MTCH.

In step S13, the UE 100 receives, from the network 5 (gNB 200), a second MRB configuration, which is information for configuring a multicast MRB for the RRC_inactive state and includes a second MBS session ID. Specifically, the UE 100 receives the second MRB configuration including the second MBS session ID and not including an MRB ID by a multicast MCCH or an RRC Release message. The multicast MCCH or the RRC Release message may include a plurality of second MRB configurations corresponding to a plurality of multicast MRBs.

In step S14, when the second MBS session ID included in the second MRB configuration matches the first MBS session ID included in the first MRB configuration, the UE 100 performs a configuration change relating to the multicast MRB established by the first MRB configuration based on the second MRB configuration. When the MBS session ID corresponding to the multicast MRB for the RRC_connected state matches the MBS session ID corresponding to the multicast MRB for the RRC_inactive state, the UE 100 identifies the configurations (specifically, the first and second MRB configurations having the same MBS session ID) for the multicast MRB. The UE 100 performs a configuration change for the multicast MRB for the RRC_connected state by using the two identified MRB configurations. The UE 100 performs the configuration change while maintaining the PDCP entity associated with the multicast MRB.

For example, the UE 100 performs at least one of the following operations 1) to 5) by comparing the two identified MRB configurations (the first and second MRB configurations having the same MBS session ID).
1) The UE 100 may not maintain the MRB ID configured by the RRC Reconfiguration message (first MRB configuration). The UE 100 may discard the MRB ID configured by the RRC Reconfiguration message (first MRB configuration). Alternatively, the UE 100 may maintain the MRB ID configured by the RRC Reconfiguration message (first MRB configuration).
2) The UE 100 replaces the PDCP configuration configured by the RRC Reconfiguration message (first MRB configuration) with the second MRB configuration. However, the UE 100 maintains the PDCP entity and the PDCP COUNT without resetting them. The PDCP COUNT value is composed of a hyper frame number (HFN) and a PDCP sequence number (SN). The PDCP-SN is incremented in response to the reception of the PDCP packet. The HFN is incremented every time the PDCP-SN is circulated. On the other hand, the receiving-side PDCP entity performs processing in the PDCP layer by using the PDCP COUNT. By maintaining the PDCP entity and PDCP COUNT, the continuity of multicast reception can be improved.
3) When a point-to-point (PTP) leg has been configured for the multicast MRB in the RRC Reconfiguration message (first MRB configuration), the UE 100 discards or suspends the configuration of the PTP leg.
4) When a point-to-multipoint (PTM) leg has been configured for the multicast MRB in the RRC Reconfiguration message (first MRB configuration), the UE 100 changes the configuration of the PTM leg to a multicast MRB configuration for the RRC_inactive state (second MRB configuration). The UE 100 also changes a group DRX configuration to a multicast MRB configuration for the RRC_inactive state. When the UE 100 changes an RLC configuration, it may perform a reset of an RLC entity.
5) When no PTM leg has been configured in the RRC Reconfiguration message (first MRB configuration), the UE 100 applies PTM reception (multicast reception) by using a multicast MRB configuration for the RRC_inactive state.

In step S15, after transitioning to the RRC_inactive state, the UE 100 continues reception of the multicast session by using the multicast MRB after the configuration change in step S14.

### (3.3) Operation Example when Transitioning from RRC_inactive State to RRC_connected State

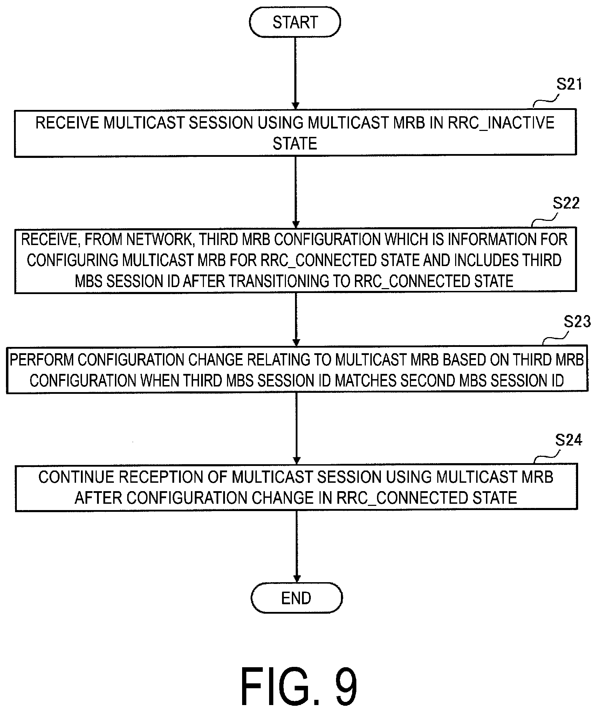

FIG. 9 is a diagram illustrating a second operation example of the UE 100 according to the embodiment. Specifically, the second operation example is an operation example when transitioning from the RRC_inactive state to the RRC_connected state. The second operation example may be an operation performed after the operation of the first operation example.

In step S21, the UE 100 in the RRC_inactive state receives a multicast session from the network 5 (gNB 200) by using a multicast MRB based on the second MRB configuration for the RRC_inactive state (specifically, a multicast MRB for the RRC_inactive state). The UE 100 receives data of the multicast session (multicast data) on an MTCH.

In step S22, after the UE 100 transitions from the RRC_inactive state to the RRC_connected state by an RRC connection resume, the UE 100 receives from the network 5 (gNB 200) a third MRB configuration, which is information for configuring a multicast MRB for the RRC_connected state and includes a third MBS session ID. The UE 100 in the RRC_connected state receives a multicast MRB configuration for the RRC_connected state by an RRC Reconfiguration message. Specifically, in the RRC_connected state, the UE 100 receives a third MRB configuration including the third MBS session ID and an MRB ID (for example, MRB ID=B) from the network 5 (gNB 200) in an RRC reconfiguration message. The RRC RRC Reconfiguration message may include a plurality of third MRB configurations corresponding to a plurality of multicast MRBs.

In step S23, when the third MBS session ID received by the RRC Reconfiguration message matches the second MBS session ID corresponding to the multicast MRB in use, the UE 100 in the RRC_connected state performs a configuration change relating to the multicast MRB based on the third MRB configuration. When the MBS session ID corresponding to the multicast MRB for the RRC_connected state matches the MBS session ID corresponding to the multicast MRB for the RRC_inactive state, the UE 100 identifies the configurations (specifically, the second and third MRB configurations having the same MBS session ID) for the multicast MRB. The UE 100 performs a configuration change for the multicast MRB for the RRC_inactive state by using the two identified MRB configurations. The UE 100 performs the configuration change while maintaining a PDCP entity associated with the multicast MRB. The UE 100 assigns the MRB ID included in the identified third MRB configuration to the multicast MRB.

For example, the UE 100 performs at least one of the following operations 1) to 4) by comparing the two identified MRB configurations.
1) The UE 100 identifies the MRB ID configured in the RRC Reconfiguration message (third MRB configuration) and applies (maintains) the identified MRB ID as a configuration for the multicast MRB.
2) The UE 100 replaces the PDCP configuration for the RRC_inactive state configured by the second MRB configuration with the PDCP configuration configured by the RRC Reconfiguration message (third MRB configuration). However, the UE 100 maintains the PDCP entity and the PDCP COUNT corresponding to the multicast MRB without resetting them.
3) When a PTP leg has been configured in the RRC Reconfiguration message (third MRB configuration), the UE 100 applies or resumes the configuration of the PTP leg.
4) When a PTM leg has been configured in the RRC Reconfiguration message (third MRB configuration), the UE 100 changes the configuration of the PTM leg to a multicast MRB configuration for the RRC_connected state (third MRB configuration). The UE 100 also changes the group DRX configuration to a multicast MRB configuration for the RRC_connected state. When changing an RLC configuration, the UE 100 may perform a reset of an RLC entity.

In step S24, the UE 100 in the RRC_connected state continues reception of the multicast session by using the multicast MRB after the configuration change in step S23.

### (4) Other Embodiments

Although the multicast reception in the RRC_inactive state has been mainly described in the above-described embodiments, the operations according to the above-described embodiments may also be applied to multicast reception in the RRC_idle state. With respect to the RRC_idle state, the above-described RRC resume (Resume) can be read as RRC establishment (Establishment).

The operation flows described above can be separately and independently implemented, and also be implemented in combination of two or more of the operation flows. For example, some steps of one operation flow may be added to another operation flow or some steps of one operation flow may be replaced with some steps of another operation flow. In each flow, all steps may not be necessarily performed, and only some of the steps may be performed. The order of steps in each flow may be appropriately modified.

Although the example in which the base station is an NR base station (gNB) has been described in the embodiments and examples described above, the base station may be an LTE base station (eNB) or a 6G base station. The base station may be a relay node such as an Integrated Access and Backhaul (IAB) node. The base station may be a DU of the IAB node. The UE 100 may be a Mobile Termination (MT) of the IAB node.

That is, the UE 100 may be a terminal function unit (a type of communication module) for a base station to control a repeater that performs signal relay. Such terminal function unit is referred to as an MT. Examples of the MT include, a Network Controlled Repeater (NCR)-MT, a Reconfigurable Intelligent Surface (RIS)-MT, in addition to the IAB-MT.

The term "network node" mainly means a base station, but may also mean a core network apparatus or a part (CU, DU, or RU) of the base station. The network node may include a combination of at least a part of the apparatus of the core network and at least a part of the base station.

A program causing a computer to execute each of the processing executed by the UE 100 or the gNB 200 may be provided. The program may be recorded in a computer-readable medium. Use of the computer-readable medium enables the program to be installed on a computer. Here, the computer-readable medium on which the program is recorded may be a non-transitory recording medium. The non-transitory recording medium is not particularly limited, and may be, for example, a recording medium such as a CD-ROM or a DVD-ROM. Circuits for executing processing executed by the UE 100 or the gNB 200 may be integrated, and at least a part of the UE 100 and the gNB 200 may be implemented as a semiconductor integrated circuit (chipset, System on a chip (SoC)).

The functions achieved by the UE 100 or the gNB 200 (the network node) may be implemented in a circuitry or a processing circuitry programmed to perform the described functions, including a general-purpose processor, a special-purpose processor, an integrated circuit, application specific integrated circuits (ASICs), a central processing unit (CPU), a conventional circuit, and/or combinations thereof. The processor may include transistors and other circuits and may be considered a circuitry or a processing circuitry. The processor may be a programmed processor that executes a program stored in the memory. As used herein, a circuitry, a unit, means are hardware programmed to achieve, or hardware performing, the described functions. The hardware may be any hardware disclosed herein or any hardware programmed to achieve or known to perform the described functions. When the hardware is a processor that is considered to be a type of circuitry, the circuitry, means, or a unit is a combination of hardware and software used to configure the hardware and/or the processor.

The phrases "based on" and "depending on/in response to" used in the present disclosure do not mean "based only on" and "only depending on/in response to" unless specifically stated otherwise. The phrase "based on" means both "based only on" and "based at least in part on". The phrase "depending on" means both "only depending on" and "at least partially depending on". The terms "include", "comprise", and variations thereof do not mean that only the listed items are included, but mean that only the listed items may be included or that additional items may be included in addition to the listed items. The term "or" used in the present disclosure is not intended to be "exclusive or". Any references to elements using designations such as "first" and "second" as used in the present disclosure do not generally limit the quantity or order of those elements. These designations may be used herein as a convenient method of distinguishing between two or more elements. Thus, a reference to first and second elements does not mean that only two elements may be employed there or that the first element needs to precede the second element in some manner. For example, when the English articles such as "a", "an", and "the" are added in the present disclosure through translation, these articles include the plural unless clearly indicated otherwise in context.

The embodiments have been described above in detail with reference to the drawings, but specific configurations are not limited to those described above, and various design variation can be made without departing from the gist of the present disclosure.

The present application claims priority to Japanese Patent Application No. 2023-164162 (filed on September 27, 2023), the contents of which are incorporated herein by reference in their entirety.

### (5) Supplements

Features relating to the embodiments described above are described below as supplementary notes.

### (Supplementary Note 1)

A communication method executed by a user equipment in a mobile communication system for providing a multicast broadcast service (MBS), the communication method including the steps of:
establishing, in an RRC_connected state, a multicast radio bearer (MRB) based on a first MRB configuration configured from a network;
receiving, from the network and by using the established multicast MRB, a multicast session corresponding to a first MBS session ID included in the first MRB configuration;
receiving, from the network, a second MRB configuration, which is information for configuring a multicast MRB for an RRC_inactive state and includes a second MBS session ID; and
performing, based on the second MRB configuration, a configuration change relating to the established multicast MRB when the second MBS session ID matches the first MBS session ID.

### (Supplementary Note 2)

The communication method according to Supplementary Note 1, in which the performing of the configuration change includes performing the configuration change while maintaining a PDCP entity associated with the multicast MRB.

### (Supplementary Note 3)

The communication method according to Supplementary Note 1 or 2, further including receiving, from the network in an RRC reconfiguration message, the first MRB configuration, which is information for configuring a multicast MRB for the RRC_connected state and includes the first MBS session ID and an MRB ID, in the RRC_connected state.

### (Supplementary Note 4)

The communication method according to any one of Supplementary Notes 1 to 3, in which the receiving of the second MRB configuration includes receiving, in a multicast MCCH or an RRC release message, the second MRB configuration including the second MBS session ID and not including an MRB ID.

### (Supplementary Note 5)

The communication method according to any one of Supplementary Notes 1 to 4, further including continuing, after transitioning to the RRC_inactive state, reception of the multicast session by using the multicast MRB after the configuration change.

### (Supplementary Note 6)

The communication method according to any one of Supplementary Notes 1 to 5, further including the steps of:
receiving, from the network after transitioning from the RRC_inactive state to the RRC_connected state, a third MRB configuration, which is information for configuring a multicast MRB for the RRC_connected state and includes a third MBS session ID; and
performing, based on the third MRB configuration, a configuration change relating to the multicast MRB when the third MBS session ID matches the second MBS session ID.

### (Supplementary Note 7)

The communication method according to Supplementary Note 6, further including continuing, after transitioning to the RRC_connected state, reception of the multicast session by using the multicast MRB after the configuration change.

### (Supplementary Note 8)

The communication method according to Supplementary Note 6 or 7, in which the performing of the configuration change based on the third MRB configuration includes performing the configuration change while maintaining a PDCP entity associated with the multicast MRB.

### (Supplementary Note 9)

The communication method according to any one of Supplementary Notes 6 to 8, further including receiving, from the network in an RRC reconfiguration message, the third MRB configuration including the third MBS session ID and an MRB ID, in the RRC_connected state.

### (Supplementary Note 10)

The communication method according to Supplementary Note 9, in which the performing of the configuration change based on the third MRB configuration includes assigning the MRB ID included in the third MRB configuration to the multicast MRB.

### (Supplementary Note 11)

A user equipment used in a mobile communication system for providing a multicast broadcast service (MBS), the user equipment including
a controller configured to execute:
in an RRC_connected state, processing of establishing a multicast radio bearer (MRB) based on a first MRB configuration configured from a network;
processing of receiving, from the network and by using the established multicast MRB, a multicast session corresponding to a first MBS session ID included in the first MRB configuration;
processing of receiving, from the network, a second MRB configuration, which is information for configuring a multicast MRB for an RRC_inactive state and includes a second MBS session ID; and
processing of performing, based on the second MRB configuration, a configuration change relating to the established multicast MRB when the second MBS session ID matches the first MBS session ID.

### REFERENCE SIGNS

1: Mobile communication system
5: Network
10: RAN
20: CN
100: User equipment (UE)
110: Receiver
120: Transmitter
130: Controller
200: gNB (base station)
210: Transmitter
220: Receiver
230: Controller
240: Backhaul communicator

## Claims

1. A communication method executed by a user equipment in a mobile communication system for providing a multicast broadcast service (MBS), the communication method comprising the steps of:
establishing, in an RRC_connected state, a multicast radio bearer (MRB) based on an MRB configuration configured from a network;
receiving, from the network and by using the established multicast MRB, a multicast session corresponding to a first MBS session ID comprised in the MRB configuration;
receiving, from the network, a multicast configuration, which is information for configuring multicast reception for an RRC_inactive state and comprises a second MBS session ID; and
applying the multicast configuration when a multicast session corresponding to the second MBS session ID is received in the RRC_inactive state in the same cell as a cell in which the multicast session corresponding to the first MBS session ID has been received in the RRC_connected state.

2. The communication method according to claim 1, further comprising the steps of:
maintaining, in the RRC_inactive state, the multicast MRB and a PDCP entity associated with the multicast MRB; and
receiving, in the RRC_inactive state and by using the multicast MRB, the multicast session.

3. The communication method according to claim 1, further comprising:
receiving, from the network in an RRC reconfiguration message, the MRB configuration, which is information for configuring a multicast MRB for the RRC_connected state and comprises the first MBS session ID and an MRB ID, in the RRC_connected state.

4. The communication method according to claim 1, wherein the receiving of the multicast configuration comprises receiving, in an RRC release message, the multicast configuration comprising the second MBS session ID and not comprising an MRB ID.

5. A communication method executed by a user equipment in a mobile communication system for providing a multicast broadcast service (MBS), the communication method comprising the steps of:
establishing, in an RRC_connected state, a multicast radio bearer (MRB) based on a first MRB configuration configured from a network;
receiving, from the network and by using the established multicast MRB, a multicast session corresponding to a first MBS session ID comprised in the first MRB configuration;
receiving, from the network, a second MRB configuration, which is information for configuring a multicast MRB for an RRC_inactive state and comprises a second MBS session ID; and
performing, based on the second MRB configuration, a configuration change relating to the established multicast MRB when the second MBS session ID matches the first MBS session ID.

6. The communication method according to claim 5, wherein the performing of the configuration change comprises performing the configuration change while maintaining a PDCP entity associated with the multicast MRB.

7. The communication method according to claim 5, further comprising:
receiving, from the network in an RRC reconfiguration message, the first MRB configuration, which is information for configuring a multicast MRB for the RRC_connected state and comprises the first MBS session ID and an MRB ID, in the RRC_connected state.

8. The communication method according to claim 5, wherein the receiving of the second MRB configuration comprises receiving, in a multicast MCCH or an RRC release message, the second MRB configuration comprising the second MBS session ID and not comprising an MRB ID.

9. The communication method according to claim 5, further comprising:
continuing, after transitioning to the RRC_inactive state, reception of the multicast session by using the multicast MRB after the configuration change.

10. The communication method according to claim 5, further comprising the steps of:
receiving, from the network after transitioning from the RRC_inactive state to the RRC_connected state, a third MRB configuration, which is information for configuring a multicast MRB for the RRC_connected state and comprises a third MBS session ID; and
performing, based on the third MRB configuration, a configuration change relating to the multicast MRB when the third MBS session ID matches the second MBS session ID.

11. The communication method according to claim 10, further comprising:
continuing, after transitioning to the RRC_connected state, reception of the multicast session by using the multicast MRB after the configuration change.

12. The communication method according to claim 10, wherein the performing of the configuration change based on the third MRB configuration comprises performing the configuration change while maintaining a PDCP entity associated with the multicast MRB.

13. The communication method according to claim 10, further comprising:
receiving, from the network in an RRC reconfiguration message, the third MRB configuration comprising the third MBS session ID and an MRB ID, in the RRC_connected state.

14. The communication method according to claim 13, wherein the performing of the configuration change based on the third MRB configuration comprises assigning the MRB ID comprised in the third MRB configuration to the multicast MRB.

15. A user equipment used in a mobile communication system for providing a multicast broadcast service (MBS), the user equipment comprising:
a controller configured to execute:
in an RRC_connected state, processing of establishing a multicast radio bearer (MRB) based on a first MRB configuration configured from a network;
processing of receiving, from the network and by using the established multicast MRB, a multicast session corresponding to a first MBS session ID comprised in the first MRB configuration;
processing of receiving, from the network, a second MRB configuration, which is information for configuring a multicast MRB for an RRC_inactive state and comprises a second MBS session ID; and
processing of performing, based on the second MRB configuration, a configuration change relating to the established multicast MRB when the second MBS session ID matches the first MBS session ID.
